# EUROPEAN PATENT SPECIFICATION

(11) **EP 1 482 768 B1**
(45) Date of publication and mention of the grant of the patent: **07.01.2009**
(21) Application number: 03012423.4
(22) Date of filing: 30.05.2003
(51) Int. Cl.: H05B 33/08

(54) **Method and driver for driving electroluminescent lamps**
Verfahren und Schaltung zum Betreiben von elektrolumineszenten Lampen
Procédé et dispositif de commande de lampes electroluminescentes

(43) Date of publication of application: 01.12.2004
(73) Proprietor: Continental Automotive GmbH, 30165 Hannover (DE)
(72) Inventor: Burau, Alf, Dr., 63739 Aschaffenburg (DE); Noll, Heinrich, Dr., 64823 Gross-Umstadt (DE); Schilling, Peter, 63791 Karlstein (DE); Wenning, Jürgen, 63814 Mainaschaff (DE)

(56) References cited:
- US-A- 5 089 748
- US-A- 5 493 183

## Description

The invention relates to a method for driving an electroluminescent lamp to emit light at a brightness set level, in which a variable bias voltage is being provided to said electroluminescent lamp, the variable bias voltage being increased with the duration of the on-time of said electroluminescent lamp.

A type of electroluminescent lamp that is used as light source for backlighting displays or panels, such as widely applied in automotive applications, is a thin structure formed of a layer of electroluminescent material sandwiched between two conductive layers. When a sufficiently high bias voltage is applied across the two electrodes, a resulting electric field causes the intermediate electroluminescent layer to emit light that is visible through the transparent electrode. In general, the brightness of emission increases with the bias voltage, up to its maximum allowable voltage level. Apart therefrom, electroluminescent lamps suffer from brightness decay progressing in time due to aging. The aging process giving rise to said brightness decay occurs only during the actual on-time of the electroluminescent lamp in question, i.e. during the periods in which the electroluminescent lamp is actually lighting. Difference should be made between half-life on the one hand and life time on the other hand. Where half-life is defined as the actual on-time from initial turn-on until the lamp dims to half the original brightness at constant nominal bias setting, life time is understood to be the actual on-time, elapsing from initial turn-on until the lamp dims to its lowest acceptable brightness level while adequately increasing the bias voltage up to its maximum allowable upper limit value. Such lowest acceptable brightness level may be assumed to correspond to e.g. 50% of the original brightness level, hereinafter also being referred to as brightness set level.

A display driver circuit implementing an on-time dependent increase of the variable bias voltage of an electroluminescent lamp to emit light at a brightness set level being stabilized against aging as such is known e.g. from US Patent number 5,493,183. The known display driver circuit provides open loop compensation of the typical on-time dependent, non-linear brightness decay of electroluminescent lamps by using an inverter controlled by a microprocessor. The microprocessor controls the inverter in accordance with a table containing data which is the inverse function of the non-linear brightness decay. The microprocessor tracks the total on-time of the electroluminescent lamp in question and selects the appropriate data from the table for driving the lamp. However, due to element spread, the non-linear brightness decay of electroluminescent lamps varies from one lamp to the other. The open loop control is fixed to the inverse function of the non-linear brightness decay stored and does not provide for any correction in mismatch between the stored data on the one hand and the actual brightness decay of the electroluminescent lamp used on the other hand. Due to this control mismatch the lamp may not be properly used to its full lifetime.

US 5,089,748 describes a closed loop control for an electroluminscent lamp with a photo-diode for detecting the lamp brightness of the electroluminescent lamp and providing an output signal responsive to the intensity of the lamp and a circuit of amplifiers and integrators.

In consequence, amongst other things, it is an object of the present invention to provide a method as recited suprea that provides for an automatic stabilisation in brightness of an electroluminescent lamp, which is more accurate than the above cited conventional display driver circuit and which allows for a full lifetime use of the lamp.

Now therefore, according to one of its aspects, the invention is characterized by a closed loop control of the brightness of the electroluminescent lamp being subject to said duration of the on-time for stabilisation of the light intensity of the electroluminescent lamp at said brightness set level against aging.

The invention is based on a closed loop concept, in which the actual level of brightness as a bias control parameter is combined with an on-time weighting factor. The closed loop concept provides an automatic bias control which, due to the feedback mechanism in the loop, is accurately adapted to the specifics of the electroluminescent lamp, whereas stabilisation of the light intensity of the electroluminescent lamp against aging is obtained with the on-time weighting factor of the bias control signal in the loop.

Aging dependent errors in the electroluminescent lamp brightness detector are being compensated with the on-time signal from the on-time detector. The on-time detector therewith allows for the use of a non-ideal and costeffective type of electroluminscent lamp brightness detector.

An embodiment of the invention is characterised by said brightness set level being varied with the brightness in the ambiance of the electroluminescent lamp.

An embodiment of the invention is characterised by said brightness set level being varied with the an adjustable dimming level signal.

An embodiment of the invention is characterised by said closed loop control of the brightness of the electroluminescent lamp being subject to a temperature dependent weighting factor.

An embodiment of the invention is characterised by an intermittent reset of said closed loop control at said brightness set level.

The invention also relates to an electroluminescent driver circuit implementing the method for driving an electroluminescent lamp to emit light at a brightness set level, comprising a controllable power supply providing a variable bias voltage to said electroluminescent lamp and an on-time detector for detecting the total on-time of the electroluminescent lamp and deriving therefrom an on-time signal to increase the bias voltage of said electroluminescent lamp with the duration of the detected on-time. Such an electroluminescent driver circuit is characterised in accordance with the invention by an electroluminescent lamp brightness detector for deriving an electroluminescent lamp brightness signal varying with the brightness of the electroluminescent lamp being supplied to said controllable power supply through a signal combining circuit for combining said electroluminescent lamp brightness signal with said on-time signal for stabilisation of the light intensity of the electroluminescent lamp at said brightness set level against aging.

An embodiment of an electroluminescent driver circuit according to the invention is characterised by said brightness set level being provided by a brightness set level signal generator having a first control input coupled to an output of an ambient brightness detector for detecting the brightness in the ambiance of the electroluminescent lamp supplying a variable ambiant brightness level control signal varying said brightness set level.

An embodiment of an electroluminescent driver circuit according to the invention is characterised by said brightness set level signal generator having a second control input coupled to an output of a dimming potentiometer supplying an adjustable dimming level signal to said second input for a variation of the brightness set level.

An embodiment of an electroluminescent driver circuit according to the invention is characterised by n effective on-time signal generator having a first input coupled to the on-time detector and a second input coupled to a temperature sensor for generating an effective on-time signal corresponding to the on-time signal of the on-time detector varying with a temperature dependent weighting factor.

An embodiment of an electroluminescent driver circuit according to the invention is characterised by a periodic reset of said closed loop control at said brightness set level by a stepwise increase of the bias voltage of the controllable power supply within an allowable bias voltage range.

An embodiment of an electroluminescent driver circuit according to the invention is characterised by periods between subsequent resets being smaller than the time of aging dependent brightness decay below a predetermined minimum electroluminescent lamp brightness level.

An embodiment of an electroluminescent driver circuit according to the invention is characterised by said signal combining circuit including an adder circuit providing a summation of said electroluminescent lamp brightness signal with said on-time signal.

An embodiment of an electroluminescent driver circuit according to the invention is characterised by aid signal combining circuit including a variable amplifier having a signal input receiving the electroluminescent lamp brightness signal from said electroluminescent lamp brightness detector and a gain control input receiving the on-time signal from said on-time detector.

These and further features, aspects and advantages of the invention will be discussed more in detail hereinafter with reference to the disclosure of preferred embodiments of the invention, and in particular with reference to the appended Figures that illustrate:
Figure 1, a functional block diagram of a first embodiment of the invention;
Figure 2, a functional block diagram of a second embodiment of the invention;
Figure 3, a signal plot showing a characteric curves of brightness decay when applying the invention in an interruption mode;

In the following description, well known circuits have been shown in block diagram form in order not to obscure the present invention in unnecessary detail. For the most part, details concerning signal generation and processing considerations and the like have been omitted inasmuch as such details are not necessary to obtain a complete understanding of the present invention and are within the skill of persons of ordinary skill in the relevant art.

Reference will now be made to the drawings, wherein depicted elements are not necessarily shown to scale and wherein like or similar elements are designated by the same reference numeral through the several views.

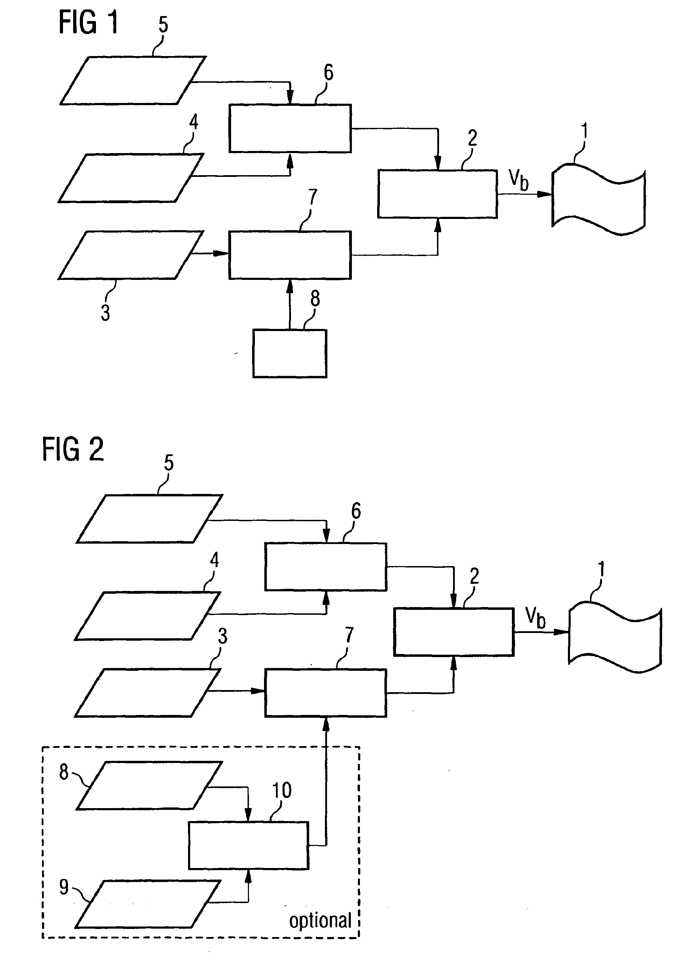

Figure 1 shows a functional block diagram of a first embodiment of the invention, in which an electroluminescent driver circuit 2-8 is driving an electroluminescent lamp 1 to emit light at a brightness set level Bset by providing thereto a variable bias voltage Vb. The electroluminescent driver circuit 2-8 comprises an electroluminescent lamp brightness detector 3 for detecting the light intensity or brightness to obtain an electroluminescent lamp brightness signal varying with the brightness of the electroluminescent lamp 1 being supplied as a bias voltage control signal to a controllable power supply 2 generating said variable bias voltage Vb. The controllable power supply 2 is therewith included in a closed brightness control loop, in which variations in brightness of the electroluminescent lamp 1 are detected with the electroluminescent lamp brightness detector 3 and negatively fed back to the controllable power supply 2, such that a dynamic compensation of said variations is obtained, stabilising the brightness of the electroluminescent lamp 1 at a certain predetermined brightness set level. This brightness set level is being determined by a brightness set level signal provided to said controllable power supply 2 from a brightness set level signal generator 6. The brightness set level signal generator 6 is being provided with a first control input coupled to an output of an ambient brightness detector 4 for detecting the brightness in the ambiance of the electroluminescent lamp 1 and deriving therefrom a variable ambiant brightness level control signal. The brightness set level signal generator 6 is also provided with a second control input coupled to an output of a dimming potentiometer 5 supplying an adjustable dimming level signal to said second input. The brightness set level signal generator 6 combines the variable ambiant brightness level control signal and the adjustable dimming level signal such that its output variable ambiant brightness level control signal varies with both brightness level control signal and the adjustable dimming level signal. This function may be implemented by an adder circuit or a signal multiplier, such as a variable amplifier. This results in the brightness set level being adjusted to the brightness in the ambiance of the electroluminescent lamp 1 as well as to a u-ser's preference brightness setting.

In accordance with the invention, the closed loop control of the brightness of the electroluminescent lamp 1 is being subject to the duration of the on-time of the electroluminescent lamp 1. For this purpose, the electroluminescent driver circuit 2-8 comprises an on-time detector 8 which tracks the total on-time of the electroluminescent lamp 1 and derives therefrom an on-time signal as on itself known, e.g. from the above cited US Patent number 5,493,183. The on-time signal is introduced into the loop by combining it with the electroluminescent lamp brightness signal in a signal combining circuit 7 following the electroluminescent lamp brightness detector 3 in the loop.

The signal combining circuit 7 may be include an adder circuit providing a summation of said electroluminescent lamp brightness signal with said on-time signal, or a signal multiplier, such as a variable amplifier having a signal input receiving the electroluminescent lamp brightness signal from said electroluminescent lamp brightness detector 3 and a gain control input receiving the on-time signal from said on-time detector 8.

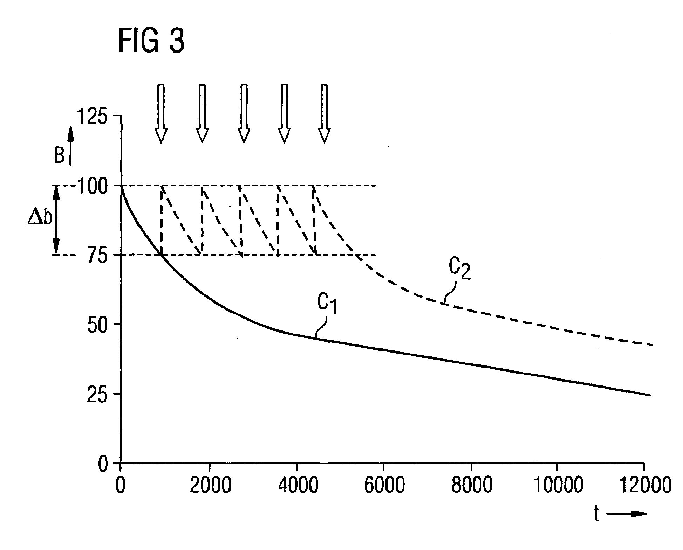

Where the negatively fed back electroluminescent lamp brightness signal to the controllable power supply 2 dynamically compensates any deviation of the brightness of the electroluminescent lamp 1 from the above predetermined brightness set level, including aging dependent brightness decay of the electroluminescent lamp 1, aging dependent errors in the electroluminescent lamp brightness detector 3 are being compensated with the on-time signal from the on-time detector 8. The on-time detector 8 therewith allows for the use of a non-ideal and costeffective type of electroluminescent lamp brightness detector 3 and apart therefrom for the so obtained dual control of the controllable power supply 2 to be operated either in a continuous mode, in which the controllable power supply is being controlled continuously, or in a discontinous mode. In said discontuous mode, the stabilisation level of the brightness feed back control is periodically reset to its original level. In accordance with the invention, this is obtained by a stepwise increase in the bias voltage of the electroluminescent lamp 1 of the variable power supply with a brightness correction step compensating the brightness decay of the electroluminescent lamp 1 from the original set level down to the minimum acceptable brightness level. The repetition frequency of this periodic reset is chosen accordingly, as will be explained in more detail with reference to Figure 3.

Figure 2 shows a functional block diagram of a second embodiment of the invention, which differs from the first embodiment of the invention of Figure 1 in that it comprises an effective on-time signal generator 10 for generating an effective on-time signal corresponding to the on-time signal of the on-time detector 8 varying with a temperature dependent weighting factor. For this purpose, the effective on-time signal generator 10 is being provided with a first input coupled to the on-time detector 8 and a second input coupled to a temperature sensor 9. The temperature sensor 9 includes a thermometer sensing the temperature occurring actually during on-time of the electroluminescent lamp 1 and deriving therefrom a temperature signal providing said temperature dependent weighting factor. The effective on-time signal generator 10 may be implemented with an adder circuit providing a summation of the on-time signal from the on-time detector 8 and a temperature signal provided by said temperature sensor 9, or a signal multiplier, such as a variable amplifier having a signal input receiving the the on-time signal from the on-time detector 8 and a gain control input receiving the temperature signal from the temperature sensor 9. The actually detected on-time signal provided by the on-time detector 8 may therefore be varied with the temperature dependent weighting factor by multiplication or by addition. The so obtained effective on-time signal is being further processed in accordance with the on-time signal in the embodiment of Figure 1.

Figure 3 is a signal plot showing by way of example the effect of the invention on the brightness decay an electroluminescent lamp when applying the invention in the above described discontinuous mode. Curve C1 shows the decrease in brightness B of an electroluminescent lamp in time t from an original brightness set level of 100 when applying an AC bias voltage with constant magnitude. Curve C2 shows the variation of brightness B of said electroluminescent lamp in time when applying the invention in discontinuous mode, i.e. with intermittent brightness detection and reset at the original brightness set level of 100 brightness dimension units, taking an electroluminescent lamp brightness level of 75 brightness dimension units as minimum acceptable level. For such reset, the magnitude of the AC bias voltage is being increased such, that it causes the brightness set level to stepwise increase with a correction step Δb, in this example amounting to 25 brightness dimension units. This stepwise increase in bias voltage magnitude and brightness set level is periodically repeated untill the magnitude of the AC bias voltage supplied to the electroluminescent lamp reaches the maximum allowable bias voltage specified for the lamp used. Said periodic brightness reset may be initiated by a reset control signal derived from the on-time signal or the effective on-time signal as a time base. The periods between two consequtive resets is chosen to correspond to the time, during which the brightness setlevel decreases with the amount of the brightness set level correction step Δb brightness dimension units, in the example of Figure 3 such periods amounting to approximately 1000 time units. Figure 3 clearly shows the extension in life time of the electroluminescent lamp, i.e. on-time use of the lamp at acceptable brightness level, obtained by the invention.

In practice, the periods between two consecutive resets are not fixed (the above indication of 1000 time units is only by way of example) but decrease as the brightness of the lamp decreases due to aging. The target period time between the consecutive resets shortens as the brightness decreases down to a value of 50 brightness dimension units.

## Claims

1. Method for driving an electroluminscent lamp (1) to emit light at a brightness set level, in which a variable bias voltage (Vb) is being provided to said electroluminescent lamp (1), the variable bias voltage (Vb) being increased with the duration of the on-time of said electroluminscent lamp (1), and in which the on-time of said lamp is detected, **characterised by**
- detecting the lamp brightness,
- combining a closed loop control of the brightness of the lamp with an on-time weighting factor so that H this bias voltage increases with the on-time in or-der to keep the lamp brightness at a set level.

2. Method for driving an electroluminescent lamp (1) to emit light at a brightness set level according to claim 1, **characterised by** said brightness set level being varied with the brightness in the ambiance of the electroluminescent lamp (1).

3. Method for driving an electroluminescent lamp (1) to emit light at a brightness set level, according to claim 1, **characterised by** said brightness set level being varied with an adjustable dimming level signal.

4. Method for driving an electroluminescent lamp (1) to emit light at a brightness set level, according to one of claims 1 to 3, **characterised by** said closed loop control of the brightness of the electroluminescent lamp (1) being subject to a temperature dependent weighting factor.

5. Method for driving an electroluminescent lamp (1) to emit light at a brightness set level, according to one of claims 1 to 4, **characterised by** an intermittent reset of said closed loop control at said brightness set level.

6. An electroluminescent driver circuit (2-10) implementing the method for driving an electroluminescent lamp (1) to emit light at a brightness set level according to claim 1, comprising a controllable power supply (2) providing a variable bias voltage (Vb) to said electroluminescent lamp (1) and an on-time detector (8) for detecting the total on-time of the electroluminescent lamp (1) and deriving therefrom an on-time signal to increase the bias voltage (Vb) of said electroluminescent lamp (1) with the duration of the detected on-time, **characterised by** an electroluminescent lamp brightness detector (3) for deriving an electroluminescent lamp brightness signal varying with the brightness of the electroluminescent lamp (1) being supplied to said controllable power supply (2) through a signal combining circuit (7) for combining said electroluminescent lamp brightness signal with said on-time signal for stabilisation of the light intensity of the electroluminescent lamp (1) at said brightness set level against aging.

7. An electroluminescent driver circuit (2-10) according to claim 6, **characterised by** said brightness set level being provided by a brightness set level signal generator (6) having a first control input coupled to an output of an ambient brightness detector (4) for detecting the brightness in the ambiance of the electroluminescent lamp (1) supplying a variable ambiant brightness level control signal varying said brightness set level.

8. An electroluminescent driver circuit (2-10) according to claim 7, **characterised by** said brightness set level signal generator (6) having a second control input coupled to an output of a dimming potentiometer (5) supplying an adjustable dimming level signal to said second input for a variation of the brightness set level.

9. An electroluminescent driver circuit (2-10) according to one of claims 6 to 8, **characterised by** an effective on-time signal generator (10) having a first input coupled to the on-time detector (8) and a second input coupled to a temperature sensor (9) for generating an effective on-time signal corresponding to the on-time signal of the on-time detector (8) varying with a temperature dependent weighting factor.

10. An electroluminescent driver circuit (2-10) according to one of claims 6 to 9, **characterised by** a periodic reset of said closed loop control at said brightness set level by a stepwise increase of the bias voltage (Vb) of the controllable power supply (2) within an allowable bias voltage range.

11. An electroluminescent driver circuit (2-10) according to claim 10, **characterised by** periods between subsequent resets being smaller than the time of aging dependent brightness decay below a predetermined minimum electroluminescent lamp brightness level.

12. An electroluminescent driver circuit (2-10) according to one of claims 6 to 11, **characterised by** said signal combining circuit (7) including an adder circuit providing a summation of said electroluminescent lamp brightness signal with said on-time signal.

13. An electroluminescent driver circuit (2-10) according to one of claims 6 to 11, **characterised by** said signal combining circuit (7) including a variable amplifier having a signal input receiving the electroluminescent lamp brightness signal from said electroluminescent lamp brightness detector (3) and a gain control input receiving the on-time signal from said on-time detector (8, 10).

## Patentansprüche

1. Verfahren zum Antreiben einer elektrolumineszenten Lampe (1) zur Abgabe von Licht mit einem Soll-Helligkeitsniveau, bei dem der elektrolumineszenten Lampe (1) eine variable Vorspannung (Vb) bereitgestellt wird, wobei sich die variable Vorspannung (Vb) mit der Dauer der An-Zeit der elektrolumineszenten Lampe (1) erhöht, und bei dem die An-Zeit der Lampe erfasst wird, **dadurch gekennzeichnet, dass**
- die Lampenhelligkeit erfasst wird,
- eine Regelung der Helligkeit der Lampe mit einem An-Zeit-Gewichtungsfaktor kombiniert wird, so dass sich diese Vorspannung mit der An-Zeit erhöht, um die Lampenhelligkeit auf dem Soll-Niveau zu halten.

2. Verfahren zum Antreiben einer elektrolumineszenten Lampe (1) zur Abgabe von Licht mit einem Soll-Helligkeitsniveau nach Anspruch 1, **dadurch gekennzeichnet, dass** sich das Soll-Helligkeitsniveau mit der Helligkeit in der Umgebung der elektrolumineszenten Lampe (1) ändert.

3. Verfahren zum Antreiben einer elektrolumineszenten Lampe (1) zur Abgabe von Licht mit einem Soll-Helligkeitsniveau nach Anspruch 1, **dadurch gekennzeichnet, dass** das Soll-Helligkeitsniveau mit einem verstellbaren Verdunkelungsniveausignal geändert wird.

4. Verfahren zum Antreiben einer elektrolumineszenten Lampe (1) zur Abgabe von Licht mit einem Soll-Helligkeitsniveau nach einem der Ansprüche 1 bis 3, **dadurch gekennzeichnet, dass** die Regelung der Helligkeit der elektrolumineszenten Lampe (1) einem temperaturabhängigem Gewichtungsfaktor unterliegt.

5. Verfahren zum Antreiben einer elektrolumineszenten Lampe (1) zur Abgabe von Licht mit einem Soll-Helligkeitsniveau nach einem der Ansprüche 1 bis 4, **gekennzeichnet durch** eine zwischenzeitliche Rücksetzung der Regelung auf das Soll-Helligkeitsniveau.

6. Elektrolumineszente Treiberschaltung (2-10), die das Verfahren zum Antreiben einer elektrolumineszenten Lampe (1) zur Abgabe von Licht mit einem Soll-Helligkeitsniveau nach Anspruch 1 implementiert, umfassend eine steuerbare Stromversorgung (2), die eine variable Vorspannung (Vb) für die elektrolumineszente Lampe (1) bereitstellt, und einen An-Zeit-Detektor (8) zum Erfassen der Gesamt-An-Zeit der elektrolumineszenten Lampe (1) und Ableiten eines An-ZeitSignals daraus zur Erhöhung der Vorspannung (Vb) der elektrolumineszenten Lampe (1) mit der Dauer der erfassten An-Zeit, **gekennzeichnet durch** einen Detektor (3) für die Helligkeit der elektrolumineszenten Lampe zur Ableitung eines Signals für die Helligkeit der elektrolumineszenten Lampe, das sich mit der Helligkeit der elektrolumineszenten Lampe (1) ändert und der steuerbaren Stromversorgung (2) durch eine Signalkombinierungsschaltung (7) zur Kombinierung des Signals für die Helligkeit der elektrolumineszenten Lampe mit dem An-Zeit-Signal zugeführt wird, zur Stabilisierung der Lichtintensität der elektrolumineszenten Lampe (1) mit dem Soll-Helligkeitsniveau gegenüber Alterung.

7. Elektrolumineszente Treiberschaltung (2-10) nach Anspruch 6, **dadurch gekennzeichnet, dass** das Soll-Helligkeitsniveau von einem Soll-Helligkeitsniveau-Signalgenerator (6) mit einem ersten Steuereingang bereitgestellt wird, der an einen Ausgang des Umgebungshelligkeitsdetektors (4) zur Erfassung der Helligkeit in der Umgebung der elektrolumineszenten Lampe (1), der ein variables, das Soll-Helligkeitsniveau änderndes Umgebungshelligkeitsniveau-Steuersignal liefert, gekoppelt ist.

8. Elektrolumineszente Treiberschaltung (2-10) nach Anspruch 7, **dadurch gekennzeichnet, dass** der Soll-Helligkeitsniveau-Signalgenerator (6) einen zweiten Steuereingang aufweist, der an einen Ausgang eines Verdunkelungspotentiometers (5) gekoppelt ist, das ein Einstellungsverdunkelungsniveausignal an den zweiten Eingang zur Änderung des Soll-Helligkeitsniveaus liefert.

9. Elektrolumineszente Treiberschaltung (2-10) nach einem der Ansprüche 6 bis 8, **gekennzeichnet durch** einen Effektive-An-Zeit-Signalgenerator (10) mit einem ersten Eingang, der an den An-Zeit-Detektor (8) gekoppelt ist, und einem zweiten Eingang, der an einen Temperatursensor (9) gekoppelt ist, zum Erzeugen eines Effektive-An-ZeitSignals, das dem An-Zeit-Signal des An-Zeit-Detektors (8) entspricht und sich mit einem temperaturabhängigen Gewichtungsfaktor ändert.

10. Elektrolumineszente Treiberschaltung (2-10) nach einem der Ansprüche 6 bis 9, **gekennzeichnet durch** eine periodische Rücksetzung der Regelung auf das Soll-Helligkeitsniveau durch eine schrittweise Erhöhung der Vorspannung (Vb) der steuerbaren Stromversorgung (2) innerhalb eines zulässigen Vorspannungsbereichs.

11. Elektrolumineszente Treiberschaltung (2-10) nach Anspruch 10, **dadurch gekennzeichnet, dass** Perioden zwischen folgenden Rücksetzungen kleiner sind als die Zeit des alterungsabhängigen Helligkeitsabfalls unter ein vorbestimmtes Minimumniveau der Helligkeit der elektrolumineszenten Lampe.

12. Elektrolumineszente Treiberschaltung (2-10) nach einem der Ansprüche 6 bis 11, **dadurch gekennzeichnet, dass** die Signalkombinierungsschaltung (7) eine Addiererschaltung enthält, die eine Aufrechung des Signals für die Helligkeit der elektrolumineszenten Lampe mit dem An-Zeit-Signal bereitstellt.

13. Elektrolumineszente Treiberschaltung (2-10) nach einem der Ansprüche 6 bis 11, **dadurch gekennzeichnet, dass** die Signalkombinierungsschaltung (7) einen variablen Verstärker enthält, der einen Signaleingang, der das Signal für die Helligkeit der elektrolumineszenten Lampe von dem Detektor (3) für die Helligkeit der elektrolumineszenten Lampe empfängt, und einen Verstärkerregelungseingang, der das An-Zeit-Signal von dem An-Zeit-Detektor (8, 10) empfängt, enthält.

## Revendications

1. Procédé de commande d'une lampe électroluminescente (1) pour qu'elle émette de la lumière à un niveau défini de luminosité, dans lequel une tension de polarisation variable (Vb) est apportée à ladite lampe électroluminescente (1), la tension de polarisation variable (Vb) étant augmentée avec la durée d'allumage de ladite lampe électroluminescente (1), et dans lequel la durée d'allumage de ladite lampe est détectée, **caractérisé par**
- la détection de la luminosité de la lampe,
- la combinaison d'une commande en boucle fermée de la luminosité de la lampe avec un facteur de pondération de durée d'allumage de telle sorte que cette tension de polarisation augmente avec la durée d'allumage de façon à maintenir la luminosité de la lampe à un niveau défini.

2. Procédé de commande d'une lampe électroluminescente (1) pour qu'elle émette de la lumière à un niveau défini de luminosité selon la revendication 1, **caractérisé par** la variation dudit niveau défini de luminosité avec la luminosité dans l'ambiance de la lampe électroluminescente (1).

3. Procédé de commande d'une lampe électroluminescente (1) pour qu'elle émette de la lumière à un niveau défini de luminosité, selon la revendication 1, **caractérisé par** la variation dudit niveau défini de luminosité avec un signal de niveau de gradation ajustable.

4. Procédé de commande d'une lampe électroluminescente (1) pour qu'elle émette de la lumière à un niveau défini de luminosité, selon l'une des revendications 1 à 3, **caractérisé par** la soumission de ladite commande en boucle fermée de la luminosité de la lampe électroluminescente (1) à un facteur de pondération dépendant de la température.

5. Procédé de commande d'une lampe électroluminescente (1) pour qu'elle émette de la lumière à un niveau défini de luminosité, selon l'une des revendications 1 à 4, **caractérisé par** une réinitialisation intermittente de ladite commande en boucle fermée audit niveau défini de luminosité.

6. Circuit de commande électroluminescent (2-10) mettant en oeuvre le procédé de commande d'une lampe électroluminescente (1) pour qu'elle émette de la lumière à un niveau défini de luminosité selon la revendication 1, comprenant une alimentation électrique (2) pouvant être commandée fournissant une tension de polarisation variable (Vb) à ladite lampe électroluminescente (1) et un détecteur de durée d'allumage (8) pour détecter la durée d'allumage totale de la lampe électroluminescente (1) et dérivant à partir de celle-ci un signal de durée d'allumage pour augmenter la tension de polarisation (Vb) de ladite lampe électroluminescente (1) avec la durée d'allumage détectée, **caractérisé par** un détecteur de luminosité de lampe électroluminescente (3) pour dériver un signal de luminosité de lampe électroluminescente variant avec la luminosité de la lampe électroluminescente (1) fourni à ladite alimentation électrique (2) pouvant être commandée par l'intermédiaire d'un circuit de combinaison de signaux (7) pour combiner ledit signal de luminosité de lampe électroluminescente avec ledit signal de durée d'allumage pour une stabilisation de l'intensité lumineuse de la lampe électroluminescente (1) audit niveau défini de luminosité en fonction du vieillissement.

7. Circuit de commande électroluminescent (2-10) selon la revendication 6, **caractérisé par** l'apport dudit niveau défini de luminosité par un générateur de signal de niveau défini de luminosité (6) ayant une première entrée de commande couplée à une sortie d'un détecteur de luminosité ambiante (4) pour détecter la luminosité dans l'ambiance de la lampe électroluminescente (1) en fournissant un signal de commande de niveau de luminosité ambiante variable faisant varier ledit niveau défini de luminosité.

8. Circuit de commande électroluminescent (2-10) selon la revendication 7, **caractérisé par** ledit générateur de signal de niveau défini de luminosité (6) ayant une deuxième entrée de commande couplée à une sortie d'un potentiomètre de gradation (5) fournissant un signal de niveau de gradation ajustable à ladite deuxième entrée pour une variation du niveau défini de luminosité.

9. Circuit de commande électroluminescent (2-10) selon l'une des revendications 6 à 8, **caractérisé par** un générateur de signal de durée effective d'allumage (10) ayant une première entrée couplée au détecteur de durée d'allumage (8) et une deuxième entrée couplée à un capteur de température (9) pour générer un signal de durée effective d'allumage correspondant au signal de durée d'allumage du détecteur de durée d'allumage (8) variant avec un facteur de pondération dépendant de la température.

10. Circuit de commande électroluminescent (2-10) selon l'une des revendications 6 à 9, **caractérisé par** une réinitialisation périodique de ladite commande en boucle fermée audit niveau défini de luminosité par une augmentation étape par étape de la tension de polarisation (Vb) de l'alimentation électrique (2) pouvant être commandée à l'intérieur d'une plage autorisée de tension de polarisation.

11. Circuit de commande électroluminescent (2-10) selon la revendication 10, **caractérisé par** des périodes entre réinitialisations subséquentes plus petites que le temps de diminution de la luminosité dépendant du vieillissement en dessous d'un niveau de luminosité de lampe électroluminescente minimum prédéterminé.

12. Circuit de commande électroluminescent (2-10) selon l'une des revendications 6 à 11, **caractérisé par** ledit circuit de combinaison de signaux (7) incluant un circuit de additionneur fournissant une somme dudit signal de luminosité de lampe électroluminescente avec ledit signal de durée d'allumage.

13. Circuit de commande électroluminescent (2-10) selon l'une des revendications 6 à 11, **caractérisé par** ledit circuit de combinaison de signaux (7) incluant un amplificateur variable ayant une entrée de signaux recevant le signal de luminosité de lampe électroluminescente provenant dudit détecteur de luminosité de lampe électroluminescente (3) et une entrée de commande de gain recevant le signal de durée d'allumage provenant dudit détecteur de durée d'allumage (8, 10).
